# EUROPEAN PATENT SPECIFICATION

(11) **EP 2 296 310 B1**
(45) Date of publication and mention of the grant of the patent: **09.05.2012**
(21) Application number: 10251518.6
(22) Date of filing: 27.08.2010
(51) Int. Cl.: H04L 12/18, H04L 29/08

(54) **Computer networking**
Rechnervernetzung
Mise en réseau informatique

(30) Priority: 10.09.2009 GB 0915897
(43) Date of publication of application: 16.03.2011
(73) Proprietor: Thales Holdings UK Plc, Addlestone, Surrey KT15 2NX (GB)
(72) Inventor: Menzies, Rupert, Weybridge, Addlestone Surrey KT15 2NX (GB); Pritchard, Ben, Reading Berkshire RG2 0SB (GB)
(74) Representative: Round, Edward Mark

(56) References cited:
- US-A- 5 572 582
- US-A1- 2006 215 630
- US-A1- 2008 279 119
- ROSENBERG CISCO SYSTEMS J: "A Framework for Conferencing with the Session Initiation Protocol; draft-ietf-sipping-conferencing-framework- 05.txt", IETF STANDARD-WORKING-DRAFT, INTERNET ENGINEERING TASK FORCE, IETF, CH, vol. sipping, no. 5, 27 May 2005 (2005-05-27), XP015040699, ISSN: 0000-0004

## Description

The present invention is concerned with access of computer implemented facilities in a computer network, for use by more than one operator thereof at different points in the network. It is particularly, but not exclusively, concerned with computer networking to define a collaborative working environment.

Collaborative working environments (CWEs), implemented by means of a computer network, have been known for several years. The level of interactivity offered by a CWE has increased over the years, to the extent that now it is desirable that a group of users should have access to shared documents stored at a location in the computer network but accessible to several users, and should in parallel have access to media based collaborative tools such as voice or video conferencing.

In business environments, meetings are a necessary tool to enable business decisions to be made. Meetings nowadays can involve the use of computer implemented aids, such as presentations (for instance as effected by means of the Microsoft PowerPoint tool), or working documents (such as might be effected through the use of Microsoft Word or Excel).

In addition, recent technological developments have reduced the need for participants in a meeting to be physically co-located. In particular, multiple participant telephonic sessions (known as conference calls) developed many years ago and, with appropriate preparation of meeting documents, meeting participants have been able to achieve an adequate level of meeting participation. A natural addition to conference calls has been the development of video conferencing, in which video data is exchanged between participating nodes in a video conferencing network. As improvements have been made to data compression and transmission rates, so have video display refresh rates increased, improving participant experience.

It is desirable that collaboration environments employing technology should be sufficiently effective that the need for participants to travel and meet is further reduced. This can be advantageous from the perspective of arranging ad hoc meetings, but also can reduce travel expenditure. Moreover, as businesses become more conscious of the environmental impact of their activities, the possible reduction in travel by meeting participants is also desirable from the perspective of environmental impact.

One obstacle to the full adoption of computer implemented CWEs is the need, in many cases, for participants to be able to work collaboratively on working documents. Moreover, collaborative working on a 'whiteboard' or the like can be difficult to implement in a CWE to the satisfaction of all users. This is because, in part, some existing CWEs require all processing necessary to their implementation to be carried out at users' computer devices. The performance of the networked CWE is thus dependent entirely on the capability of each participating computer to achieve an acceptable level of data transaction to enable the meeting participant(s) using that computer to obtain a useful quality of service.

On the other hand, some CWEs are web based, and so the bulk of processing in such circumstances is carried out at a web server hosting the service.

It would evidently be unacceptable to a particular user for that user's interactions in a CWE defined whiteboard to be improperly handled, such as due to transmission or processing delays. For instance a particular user's commands and interactions might be received by other participants' instances of the whiteboard too late to be useful, or corrupted by error.

This scenario is also likely to be unacceptable to other participants in the CWE; the level of disruption experienced by the other participants, as a result of untimely interventions in a working document by such a participant, could have a severe impact on the usefulness of such a CWE session, and could reduce the likelihood that the CWE will be used again by the participants in the face of such a negative user experience. Indeed, a poor experience of a CWE may prejudice further an initially sceptical user, to the extent that adoption of such technology becomes slower.

One particular aspect of the operation of existing CWEs which has given rise to negative user experience is the manner in which a CWE session is established. CWE tools include Skype, WebEx and Instant Messenger applications (for example Windows Live Messenger, Yahoo and AIM), all of which assume that the user has access to a single personal computer (PC) with which to interact. When dealing with large scale displays and high definition audio/video conferencing (as would be expected by many CWE participants), such a PC may not necessarily provide sufficient computing facilities to enable a user to participate effectively. Moreover, a PC with a single display cannot offer to a user a session experience which separates "communication space" (such as the video conferencing) from "task space" (electronic whiteboard, shared documents etc.).

Further, more advanced CWE applications require extensive set-up procedures which can be technically complex. As it is implicit in the use of such applications that each participant must perform certain set-up tasks (but that substantially more set-up tasks must be performed by a meeting organiser), it is inherently disadvantageous to have such obstacles presented to less technically adept users (and especially to meeting organisers). Moreover, such set-up procedures can discourage the spontaneous use of such CWE applications, and reduce the likelihood of regular and informal use of a CWE application by a collaborative team.

Therefore, it has been observed that existing CWE tools do not allow multiple PCs to be provided at a particular node to share the computing overhead of a session, or to separate the communication space from the task space, and that instantaneous, full function collaboration between potential participants is thereby discouraged.

US 2008/0279119 A1 discloses a system and method for handling multimedia conference calls in a telecommunication network. A group server sends further query messages to terminals and collects their responses containing their capabilities. The group server analyzes the capabilities to determine a common set of capabilities.

Accordingly, an aspect of the invention provides a computer implemented server operable to manage conferencing communication between a plurality of networking computer implemented nodes, the server being operable to receive a connection initialisation message containing information concerning network addressing information of an initiating node, identification information of one or more other nodes to be invited into a conferencing communication, and information identifying required capabilities of an invited node to participate in conferencing communication, the server being operable on receipt of such a message to send, to each invited node identified in said message, a capabilities enquiry message requesting the invited node to confirm that it has capability to handle conferencing communication and, if said invited node is capable of being engaged in said conferencing communication, then engaging said invited node in conferencing communication with said initiating node.

According to another aspect of the invention, a computer network comprises a server and a plurality of nodes in networking communication with said server, said server comprising:
initiation message receiving means operable to receive and process a conferencing request message from an initiating node of said plurality of nodes, said conferencing request message identifying one or more invited nodes with which said initiating node requires conferencing communication and capability requirements of said invited nodes on the basis of which conferencing communication is dependent; and
conferencing establishment message sending means operable to send, to said initiating node, a message containing information sufficient to enable said initiating node to establish conferencing communication with the or each invited node with capabilities suitable to meet said capability requirements.

Another aspect of the invention provides one or more computer program products capable of establishing a general purpose computer as a server as set out above. The computer program product may be delivered as a signal, or on a computer readable storage medium.

A specific embodiment of the invention will now be described for further illustration of the invention, with reference to the accompanying drawings, in which:
Figure 1 illustrates a network in accordance with a specific embodiment of the invention;
Figure 2 illustrates a flow diagram setting out steps of a process performed by a CWE master of a user subnetwork of the network illustrated in figure 1; and
Figure 3 illustrates a flow diagram setting out steps of a process performed by a CWE server of the network illustrated in figure 1.

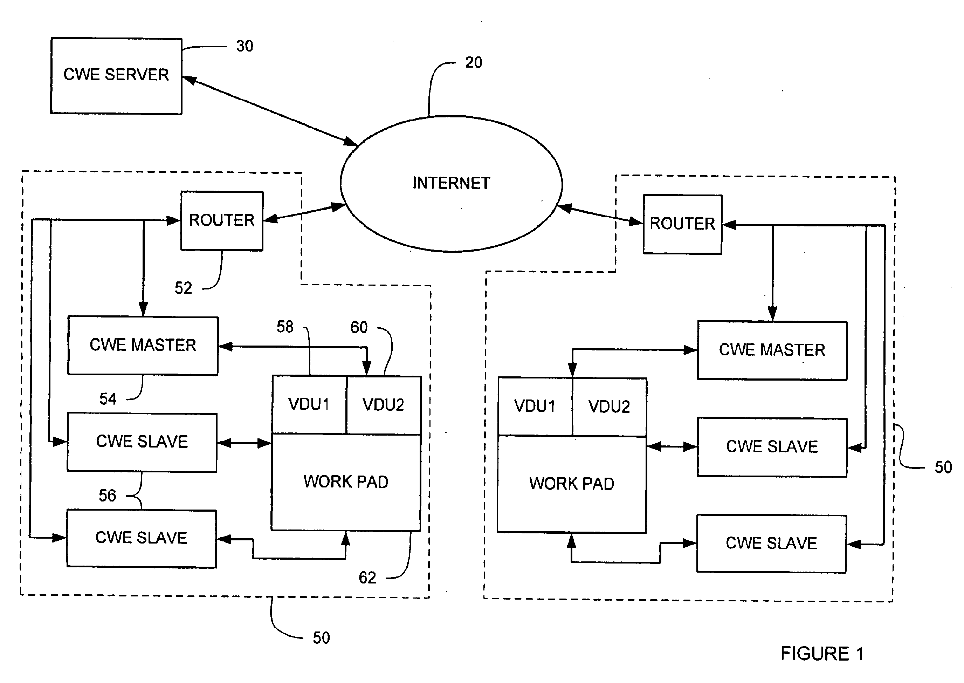

Figure 1 illustrates a network 10 in a specific embodiment of the invention. This specific embodiment of the invention is intended to demonstrate, schematically, the capability of such an embodiment to provide conferencing facilities to enable two parties (users) to interact both by way of voice and video communication, but also by way of collaboration on shared electronic documents. The intention in using the specific embodiment is to shield the two users from the technically complex process of matching the capabilities of the two user "conferencing suites" provided in, for instance, remote locations, to allow the users to interact effectively. A general aim in using the specific embodiment to be described herein is to ensure that a receiver of a conferencing request is capable of supporting conferencing and collaboration to the extent required by an initiator, to allow establishment of such conferencing and collaborative communication to a level acceptable to users.

It will be appreciated that the network 10 is implemented making use of the existing infrastructure of the internet 20 which is indicated in the diagram. Use of local networking instead of the internet 20 would be possible in local implementations of the invention; however, the specific embodiment is so configured to demonstrate the breadth of application of the invention.

Central to the operation of the specific embodiment is a Collaborative Working Environment (CWE) server 30. The CWE server 30 is operable to establish, when requested, conferencing communication between two user devices. In this embodiment, the CWE server uses an implementation of the SIP Standard to establish these facilities.

To do this, the CWE server 30 makes use of information gathered by client devices (to be described below); the information identifies users registered to the network 10 and which are capable of establishing conferencing communications.

The CWE server 30 further manages the continuation and termination of conferencing communications, once the CWE server 30 has enabled establishment thereof. As such, the CWE server 30 cooperates with networking participants to determine when a party to an established conferencing communication is no longer present, and reacts by terminating the communication if this is the penultimate party to the communication (i.e. only one party remains) or, in other cases, merely de-allocates computer network processing resource reserved for the departing party.

Two user subnetworks 50 are illustrated. Each of these accesses the internet by means of a router 52. A typical user subnetwork will include a CWE master 54 and a plurality of CWE slave computers 56. The presence of a plurality of computers in a sub-network may be necessary in view of the particular processing requirements imposed by multimedia communication in a conferencing environment. In this particular case, two visual display units 58, 60 are provided, of which the first 58 presents video conferencing facilities and the second 60 provides shared document viewing facilities. A work pad 62 is provided which is operated by means of a light pen or the like.

A further advantage of using more than one computer to manage the above described input suite is that debugging of the various driver software products provided to enable implementation will be more straightforward than if a single combined input package were to be driven on a single computer.

However, it may become increasingly practical to implement a user implementation on a single computer. In such circumstances, it would merely be a question of computing power and the inter-operability of the various software components on a single computer.

Signalling communication between the CWE master 54 and slaves 56 is established by means of TCP sockets; the CWE master 54 provides principal communication with the CWE server 30. The CWE master 54 thus ensures that, as viewed from the CWE server 30, the user subnetwork has a single processing presence. Were the CWE slaves 56 to have, for instance, their own server communication, the conferencing communication would become unduly unwieldy and this could also reduce the effectiveness of the network. The internet connection establishes any number of links between local and remote slaves.

In this illustrated embodiment, the CWE master 54 executes software for the collaborative work environment, such as for the management of electronic documents shared with other users with which conferencing communication is established, and the light pen operated work pad 62. The first illustrated CWE slave 56 manages video conferencing, and thus displays video conferencing images at VDU 1 (58) and associated audio, and receives respective signals from a camera and microphone (not shown). The second CWE slave 56 is provided for logging communications sessions, such as for recording activity for traceability purposes or to enable charges to be levied to users for certain activities.

The video conferencing suite so described employs commercial off the shelf hardware incorporating well established compression standards such as those collectively known as MPEG4. Operation of the specific embodiment of the invention can be executed using software to be described herein. However, various plug and play codecs will be available, from which certain ones will be appropriate depending on the required situation. Moreover, as communications technology develops, new codecs may become available which are not currently available. It would be possible for a video conferencing suite to be 'upgraded' by incorporation of one or more of these replacement or updated codecs, from time to time.

It is important that a device purporting to offer video conferencing facilities is compatible with all other devices with which it intends to establish such video conferencing and so the specific embodiment of the present invention enables validation on this issue.

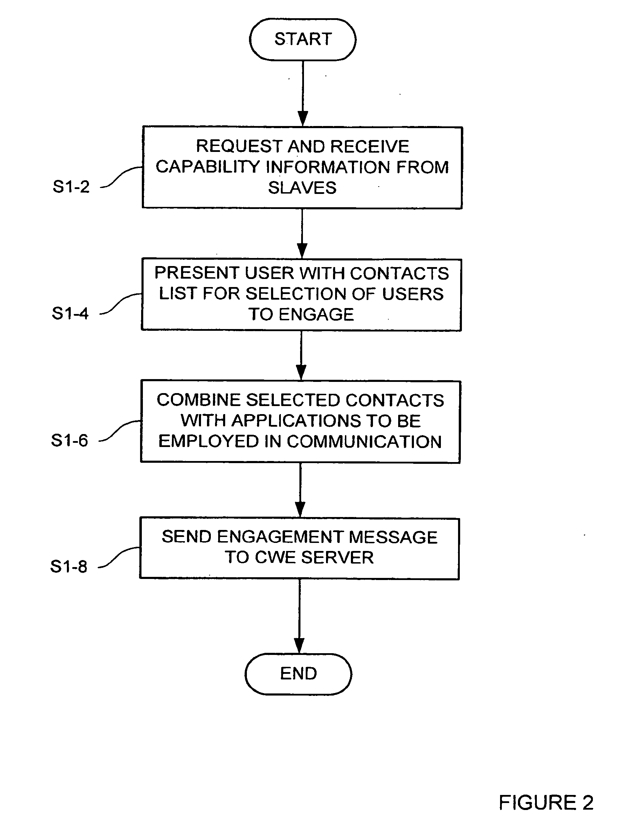

Figure 2 illustrates in further detail the operation of a CWE master 54 in accordance with the specific embodiment of the invention.

It will be understood by the reader that the initiation of conferencing communication in according with the specific embodiment is carried out by a user. A suitable graphical user interface would, in practice, be provided to the user such that the user can initiate a request for conferencing. Such a user interface may include a list of options selectable by the user, such as whether the user requires all facilities of the video conference to be available. It might be the case, for instance, that a user only requires voice communication and the capability to share documents; this might be motivated by a desire to limit data transmission which would be substantially higher if video transmission were also required.

As a first step (step S1-2), the CWE master 54 requests capability information from the slaves 56 of the user conferencing suite 50. This capability information includes version information for codecs used by the slaves 56 in implementing their roles in conferencing communication, and other information necessary to specify the format of communication required by the CWE master 54.

Then, in step S1-4, the CWE master 54 presents a graphical user interface, as noted above, to the user. The graphical user interface may include one or more configuration options as discussed above, and also a contact list listing contacts which are available for selection by the user. The user will then select the one or more contacts with which conferencing communication is desired, and make any configuration selections as appropriate to the circumstances.

In step S1-6, the list of selected contacts is included in a conference request message, combined with capability information for the applications to be employed in the communication. This message is termed an engagement message, and this is sent, in step S1-8, to the CWE server 30 by means of the router 52 and through the medium of the internet 20.

The engagement message sent to the CWE server 30 combines user names of invitees, software applications essential for establishment of the proposed conferencing session, versions of those software applications employed by the sending CWE master 54 and CWE slaves 56 and internet protocol (IP) addresses for the CWE master 54 and the slaves 56.

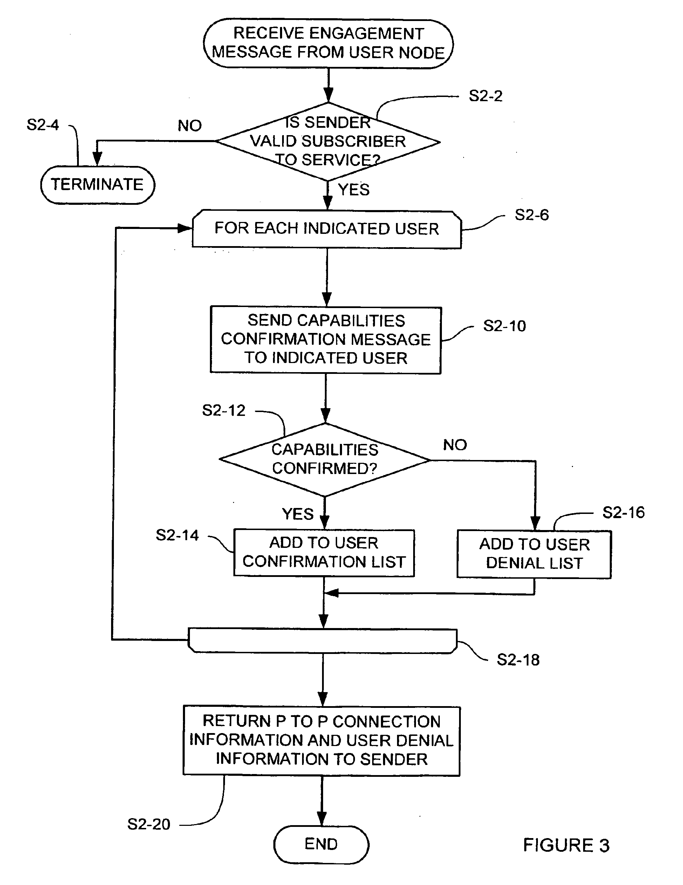

Response to receipt of this message by the CWE server is illustrated further in Figure 3.

As indicated in Figure 3, the CWE server 30 is responsive to receipt of an engagement message from a user node 50. The first step (S2-2) performed by the CWE server 30 is to validate the sender of the engagement message as being a valid subscriber to the conferencing service. Clearly, if this is not the case, the process immediately terminates (S2-4). A message could be returned to the sender, or, as indicated, the system could merely terminate without response. In the latter case, the sender would eventually, as with many other internet based activities, note a timeout, and that the request had failed. If the user of the user node 50 were to feel that this failure was in error, the user would be entitled to repeat the request.

Users generally accept that connection errors are an almost .inevitable experience in using the internet or other networking communications, and it is not necessarily the server's responsibility to have error correction in place for all of these. Moreover, the extent to which errors must be reported is a matter for the system implementer, and is not dictated by the function of the presently described specific embodiment of the invention. It is the intention, in the present embodiment, that the CWE server 30 will not process information returned by a client, concerning the reasons why a connection could not be made. Such information can, instead, be forwarded to the initiating client master 54. In one embodiment, such information might be displayed to the initiating user who, by alternative communication means, could resolve manually, with the collaboration of user at the non-responsive terminal, any technical reason why communication could not be established.

In the event that the sender of the engagement message is properly validated, then, as indicated in the loop established by steps S2-6 and S-18, certain steps are carried out for each user indicated in the engagement message. For each user indicated as an invitee in the engagement message, a capabilities confirmation message is sent by the CWE server 30 in step S2-10. Such a user can then be considered to be capable of being engaged in communication by the present embodiment.

This is done by reference to the CWE server 30 which will hold records of identified users with IP addresses for those users. IP addresses can, obviously, change from time to time, depending on the connection status of individual users. The capabilities confirmation message is sent by User Datagram Protocol (UDP) in this example embodiment, but the reader will appreciate that any suitable protocol can be selected for this purpose. It will be understood that the invitee can be established by way of a CWE master 54 with associated slaves 56, or as a single PC terminal.

Although not illustrated in the Figures, the invitee terminal looks up, on receipt of such a message, to establish if it has the software, codecs and versions available for use in conferencing that were indicated in the engagement message by the inviting user node.

If this is the case, and thus that the invited terminal can support the requested capabilities using compatible software with the required degree of currency, then the invitee sends back a confirmation message (step S2-12) accepting the invitation. It attaches information to this message on how to contact the invited terminal directly.

This contact information (such as IP address) is required so that peer-to-peer connection can be established between the inviting user and the invited user. As indicated in step S2-14, if the capabilities are confirmed, then the invited user is added to a confirmation list, together with the associated connection information. On the other hand, as indicated in step S2-16, if capabilities are not confirmed, then the invited user is added to a denial list.

At the end of the loop, i.e. when all invited users have been processed in this way, the peer-to-peer connection information is returned to the inviting user (step S2-18), along with information on users which were denied connection for whatever reason. For instance, if there is a mismatch between software versions required by the inviting user, and those available at the invited user, then the invited user (i.e. the operator of the invited party apparatus) could be contacted in some other manner (such as by telephone or email), to be requested to implement an upgrade to ensure that future requests for conferencing communication can be handled successfully.

Following completion of this, the inviting user apparatus uses the peer-to-peer connection information received from the CWE server, to establish peer-to-peer connection with the or each user indicated as being available. During establishment of peer-to-peer connection, each party sends a message to the CWE server 30 indicating that it is in session. Control over the session then passes to the applications hosted on the user communication suites 50 for the duration of a session.

While figure 3 shows a sequential determination of capabilities of users listed in the engagement message, it would also be possible to implement this in parallel, with messages being sent to each user and responses, suitably identified, being returned to the CWE server 30.

The CWE server 30 monitors applications that have been launched, and will identify if a session terminates in cooperation with clients. In effect, this function is delegated to the CWE master 54 units of the respective clients. For instance, a client master will monitor use of an application by a user. If a communications application does not give rise to a communications event within a certain period of time, for instance one hour, the CWE server 30 may assume that communication by that client has ceased. The server 30 will inform all other clients in the event that this happens.

When an application is terminated at one of the participating user communication suites 50 (such as by user input action), a message is sent to each user communication suite 50 participating in the session. Such a message initiates a user interface message inviting the user of that suite 50 to indicate if the session is to end. If that user indicates (by user input action, such as mouse click) that the session is to end then, on ending the session, the CWE server 30 establishes that the user communication suites 50 participating in the session are now available for access by other sessions. Other devices participating in the session will then be sent a message to close the session at those devices.

Whereas the specific embodiment of the invention has been described with reference to a session established between two parties (the inviter and the invitee), the reader will understand that the invention can also be applied to sessions involving three or more parties. In the case of sessions intended to be established between three or more parties, it is desirable to establish peer-to-peer communication between the inviting party and the invited parties one at a time. The CWE master 54 waits for establishment of a peer-to-peer communication with another party before commencing establishment with a further party. This reduces the chance of collision of messages between the parties during establishment of communication. Thus, an invitee in receipt of a communication directly from a CWE master 54 is configured, in accordance with the specific embodiment, to respond immediately, in the knowledge that it can be confident that the CWE master 54 will be able to initiate, since it is driving initiation process.

With regard to termination of a session, if an application is closed by a user at a user communication suite 50, then the CWE server 30 will detect this. This is achieved by initiating a watch on processes performed in the operating system adopted by communications suites 50. One possible operating system is Microsoft Windows, although other operating systems offer similar facilities.

Taking the example of Microsoft Windows, the operating system assigns a process ID to each application running in the operating environment defined by the operating system. An event will be triggered if the process then disappears. This relies on the presence in the operating system of a function which can be used by an application running on the operating system to inform that application when a particular process ID disappears from the operating environment.

If a particular application, essential to maintenance of the conferencing session, is removed from the process list held at a particular communications suite, then the CWE server 30 detects this and it is considered to be a notification event. The CWE server 30 then sends a message to every participating suite 50 in the session. Receipt of a session termination message from the CWE server 30 causes the recipient thereof to terminate sessions of applications running to support of the communications session. Following this, the communication suites 50 inform the CWE server 30 that they are then on-line and free for further communication.

In one approach for implementation of a specific embodiment of the invention, a configuration is provided in which, if the inviter of a conferencing session takes action which terminates its participation in the session, then the whole session will terminate. This is comparable to existing approaches, particularly with video or telephone conferencing which involve "participants" and an "organiser". On the other hand, in the same approach, if an invitee terminates its involvement, then the inviter and other invitees can maintain the communication. Thus, management of the process is at an application level rather than being at server level. Of course, if only one party remains, then the CWE master 54 will note this and terminate the session.

On the other hand, it will be evident to the reader that it would be possible to provide a configuration of the above described embodiment in which termination by any user would be sufficient to terminate the session. While this might be advantageous in terms of ensuring that communication between parties would be terminated predictably (and prevent a session being maintained inadvertently), it might be inconvenient in certain cases. For instance, it would be inconvenient in poor network conditions for every communication failure to result in total loss of a conferencing session.

While the invention has been exemplified above by way of the description of the specific embodiment, it will be appreciated by the reader that the foregoing is not intended to act as a limitation on the scope of protection sought. The scope of the invention should be read as being set out in the appended claims with reference, as appropriate, to the description.

## Claims

1. A computer implemented server (30) operable to enable establishment of conferencing communication between a plurality of networking computer implemented nodes, the server (30) being operable to receive a connection initialisation message containing information concerning network addressing information of a node initiating a conferencing communication, identification information of one or more other nodes to be invited into a conferencing communication, and information identifying required capabilities of an invited node to participate in said communication, the server (30) being operable on receipt of such a message to send, to each invited node identified in said message, a capabilities enquiry message requesting the invited node to respond with capabilities to handle conferencing communication and, if said invited node is capable of being engaged in said conferencing communication, then engage said invited node in conferencing communication with said initiating node.

2. A server in accordance with claim 1 and further operable to retrieve, from the or each invited node, addressing information suitable to allow the initiating node to locate said invited node and to establish peer-to-peer communication therewith, and to forward said addressing information to said initiating node.

3. A server in accordance with claim 2 and further operable to monitor said nodes to detect successful and maintained peer-to-peer communication between said initiating node and the or each invited node.

4. A server in accordance with any preceding claim and further operable to store a record of communication activity by one or more nodes.

5. A server In accordance with any preceding claim and operable to send, to an initiating node, in the event that an invited node is Incapable of establishing conferencing communication with said initiating node in accordance with said capabilities enquiry message, a failure report message containing information indicating the lack of capability of said invited node.

6. A computer network comprising a server (30) and a plurality of nodes (50) in networking communication with said server, said server comprising:
initiation message receiving means operable to receive and process a conferencing request message from an initiating node of said plurality of nodes, said conferencing request message identifying one or more invited nodes with which said initiating node requires conferencing communication and capability requirements of said invited nodes on the basis of which conferencing communication is dependent;
node checking means operable to check the existence of said one or more invited nodes and to enquire whether the or each invited node has capabilities suitable to meet said capability requirements identified in said conferencing request message; and
conferencing establishment message sending means operable to send, to said initiating node, a message containing information sufficient to enable said initiating node to establish conferencing communication with the or each invited node with capabilities suitable to meet said capability requirements.

7. A computer network in accordance with claim 6 and including presence awareness means operable to monitor an established conferencing communication between said initiating node and the or each invited node, to determine if said conferencing communication is to be maintained.

8. A computer network in accordance with claim 7 wherein said presence awareness means is operable to determine if one or more of said nodes has ceased conferencing communication In said network.

9. A computer network in accordance with claim 7 or claim 8 wherein said presence awareness unit is operable to monitor for termination of conferencing activity by said initiating node, and in response to which to send to the or each invited node with which said initiating node is in conferencing communication a conferencing termination message.

10. A computer network in accordance with claim 9 wherein said presence awareness unit is operable to detect termination of conferencing activity in the form of cessation of networking activity by said initiating node or a conferencing termination message sent by said initiating node

11. A computer network in accordance with any one of claims 6 to 10 and wherein said server is operable, in the event that an invited node is determined not to be capable of establishing conferencing communication in accordance with said capability requirements, to send to said initiating node a message identifying said lack of capability.

12. A computer network in accordance with any one of claims 6 to 11 and wherein said node checking means is operable to send, to the or each invited node, a capabilities request message containing information detailing said capability requirements, and is further operable to receive from the or each invited node a response identifying whether said node meets said capability requirements.

13. A method of enabling establishment of conferencing communication between a plurality of networking computer implemented nodes, the method comprising receiving a connection initialisation message containing Information concerning network addressing information of a node initiating a conferencing communication, identification information of one or more other nodes to be invited into a conferencing communication, and information identifying required capabilities of an invited node to participate in said communication, in response to receiving such a message, sending, to each Invited node identified in said message, a capabilities enquiry message requesting the invited node to respond with capabilities to handle conferencing communication and, if said invited node is capable of being engaged in said conferencing communication, then engaging said invited node in conferencing communication with said initiating node.

14. A computer program product comprising processor executable instructions which, when executed on a general purpose computer, cause said computer to operate as a server in accordance with any one of claims 1 to 6.

15. A computer program product comprising processor executable instructions which, when executed on a general purpose computer, cause said computer to perform a method in accordance with claim 13.

## Patentansprüche

1. Computerimplementierter Server (30), betriebsfähig, den Aufbau von Konferenzkommunikation zwischen einer Vielzahl von vernetzten computerimplementierten Knoten zu ermöglichen, wobei der Server (30) betriebsfähig ist, eine Verbindungsinitialisierungsnachricht zu empfangen, die Folgendes betreffende Information enthält; Netzadressinformation eines eine Konferenzkommunikation initiierenden Knotens, Identifikationsinformation von einem oder mehreren anderen Knoten, die zu einer Konferenzkommunikation einzuladen sind, und Information, die erforderliche Fähigkeiten eines eingeladenen Knotens zur Teilnahme an der Kommunikation identifiziert, wobei der Server (30) betriebsfähig ist, bei Empfang einer solchen Nachricht jedem in der Nachricht identifizierten eingeladenen Knoten eine Fähigkeitsabfragenachricht zu senden, in der der eingeladene Knoten aufgefordert wird, mit Fähigkeiten zum Handhaben von Konferenzkommunikation zu antworten und, falls der eingeladene Knoten befähigt ist, in die Konferenzkommunikation einbezogen zu werden, dann den eingeladenen Knoten in Konferenzkommunikation mit dem initiierenden Knoten einzubeziehen.

2. Server nach Anspruch 1, außerdem betriebsfähig, von dem oder jedem eingeladenen Knoten Adressinformation abzurufen, die geeignet ist, dem initiierenden Knoten zu ermöglichen, den eingeladenen Knoten zu lokalisieren und Peer-zu-Peer-Kommunikation damit aufzubauen, und die Adressinformation an den initiierenden Knoten weiterzuleiten.

3. Server nach Anspruch 2, außerdem betriebsfähig, die Knoten zu überwachen, um erfolgreiche und aufrechterhaltene Peer-zu-Peer-Kommunikation zwischen dem initiierenden Knoten und dem oder jedem eingeladenen Knoten zu detektieren.

4. Server nach einem vorhergehenden Anspruch, außerdem betriebsfähig, ein Protokoll von Kommunikationsaktivität von einem oder mehreren Knoten zu speichem.

5. Server nach einem vorhergehenden Anspruch, der, falls ein eingeladener Knoten nicht fähig ist, gemäß der Fähigkeitsabfragenachricht Konferenzkommunikation mit dem initiierenden Knoten aufzubauen, betriebsfähig ist, eine Fehlerprotokollnachricht an einen initiierenden Knoten zu senden, die Information enthält, die den Fähigkeitsmangel des eingeladenen Knotens anzeigt,.

6. Computernetz, einen Server (30) und eine Vielzahl von Knoten (50) in vernetzter Kommunikation mit dem Server umfassend, wobei der Server Folgendes umfasst:
Initiierungsnachrichten-Empfangsmittel, betriebsfähig zum Empfangen und Verarbeiten einer Konferenzanforderungsnachricht von einem initiierenden Knoten der Vielzahl von Knoten, wobei die Konferenzanforderungsnachricht einen oder mehrere eingeladene Knoten identifiziert, von denen der initiierende Knoten Konferenzkommunikation und Fähigkeitsanforderungen der eingeladenen Knoten anfordert, von deren Basis Konferenzkommunikation abhängt;
Knotenprüfmittel, betriebsfähig zum Prüfen des Vorhandenseins des einen oder der mehreren eingeladenen Knoten und zum Abfragen, ob der oder jeder eingeladene Knoten Fähigkeiten hat, die geeignet sind, die Fähigkeitsanforderungen zu erfüllen, die in der Konferenzanforderungsnachricht identifiziert sind; und
Konferenzaufbaunachricht-Sendemittel, betriebsfähig zum Senden einer Nachricht an den initiierenden Knoten, die Information enthält, die ausreicht, um dem initiierenden Knoten zu ermöglichen, Konferenzkommunikation mit dem oder jedem eingeladenen Knoten mit Fähigkeiten aufzubauen, die zum Erfüllen der Fähigkeitsanforderungen geeignet sind.

7. Computernetz nach Anspruch 6, ein Präsenzkenntnismittel enthaltend, betriebsfähig zum Überwachen einer aufgebauten Konferenzkommunikation zwischen dem initiierenden Knoten und dem oder jedem eingeladenen Knoten, um zu bestimmen, ob die Konferenzkommunikation aufrechtzuerhalten ist.

8. Computernetz nach Anspruch 7, worin das Präsenzkenntnismittel zum Bestimmen betriebsfähig ist, ob einer oder mehrere der Knoten die Konferenzkommunikation im Netz beendet hat.

9. Computernetz nach Anspruch 7 oder Anspruch 8, worin die Präsenzkenntniseinheit betriebsfähig ist, auf Beendigung von Konferenzaktivität durch den initiierenden Knoten zu überwachen und als Antwort darauf, dem oder jedem eingeladenen Knoten, mit dem der initiierende Knoten in Konferenzkommunikation ist, eine Konferenzbeendigungsnachricht zu senden.

10. Computernetz nach Anspruch 9, worin die Präsenzkenntniseinheit betriebsfähig ist, die Beendigung von Konferenzaktivität in der Form von Beendigung von Netzaktivität durch den initiierenden Knoten oder einer vom initiierenden Knoten gesendeten Konferenzbeendigungsnachricht zu detektieren.

11. Computernetz nach einem der Ansprüche 6 bis 10, worin der Server für den Fall, dass ein eingeladener Knoten bestimmt wird, zum Aufbau von Konferenzkommunikation gemäß den Fähigkeitsanforderungen nicht befähigt zu sein, betriebsfähig ist, dem initiierenden Knoten eine Nachricht zu senden, die das Fehlen der Fähigkeit identifiziert.

12. Computernetz nach einem der Ansprüche 6 bis 11, worin das Knotenprüfmittel betriebsfähig ist, an den oder jeden eingeladenen Knoten eine Fähigkeitsanforderungsnachricht zu senden, die Information enthält, die die Fähigkeitsanforderungen detailliert, und außerdem betriebsfähig ist, von dem oder jedem eingeladenen Knoten eine Antwort zu empfangen die identifiziert, ob der Knoten die Fähigkeitsanforderungen erfüllt.

13. Verfahren, um den Aufbau von Konferenzkommunikation zwischen einer Vielzahl von vernetzten computerimplementierten Knoten zu ermöglichen, wobei das Verfahren das Empfangen einer Verbindungsinitialisierungsnachricht umfasst, die Folgendes betreffende Information enthält: Netzadressinformation eines eine Konferenzkommunikation initiierenden Knotens, Identifikationsinformation von einem oder mehreren anderen Knoten, die zu einer Konferenzkommunikation einzuladen sind, und Information, die erforderliche Fähigkeiten eines eingeladenen Knotens zur Teilnahme an der Kommunikation identifiziert, wobei als Antwort auf den Empfang solch einer Nachricht jedem in der Nachricht identifizierten eingeladenen Knoten eine Fähigkeitsabfragenachricht gesendet wird, in der der eingeladene Knoten aufgefordert wird, mit Fähigkeiten zum Handhaben von Konferenzkommunikation zu antworten und, falls der eingeladene Knoten befähigt ist, in die Konferenzkommunikation einbezogen zu werden, dann den eingeladenen Knoten in Konferenzkommunikation mit dem initiierenden Knoten einzubeziehen.

14. Computerprogrammprodukt, prozessorausführbare Anweisungen umfassend, die bei Ausführung auf einem Universalcomputer den Computer veranlassen, als ein Server nach einem der Ansprüche 1 bis 6 zu funktionieren.

15. Computerprogrammprodukt, prozessorausführbare Anweisungen umfassend, die bei Ausführung auf einem Universalcomputer den Computer veranlassen, ein Verfahren nach Anspruch 13 auszuführen.

## Revendications

1. Serveur mis en oeuvre dans un ordinateur (30), exploitable de manière à permettre l'établissement d'une communication de conférence entre une pluralité de noeuds mis en oeuvre dans des ordinateurs en réseau, le serveur (30) étant exploitable de manière à recevoir un message d'initialisation de connexion contenant des informations connexes à des informations d'adressage de réseau d'un noeud initiant une communication de conférence, des informations d'identification d'un ou plusieurs autres noeuds destinés à être invités à rejoindre une communication de conférence, et des informations identifiant des capacités requises d'un noeud invité en vue de participer à ladite communication, le serveur (30) étant exploitable, lors de la réception d'un tel message, de manière à envoyer, à chaque noeud invité identifié dans ledit message, un message d'interrogation sur les capacités invitant le noeud invité à répondre par des capacités permettant de gérer une communication de conférence et, au cas où ledit noeud invité est apte à être impliqué dans ladite communication de conférence, à impliquer ledit noeud invité dans la communication de conférence avec ledit noeud initiateur.

2. Serveur selon la revendication 1, exploitable en outre de manière à récupérer, à partir du noeud invité ou de chaque noeud invité, des informations d'adressage aptes à permettre au noeud initiateur de localiser ledit noeud invité et à établir une communication d'homologue à homologue avec celui-ci, et à transmettre lesdites informations d'adressage audit noeud initiateur.

3. Serveur selon la revendication 2, exploitable en outre de manière à surveiller lesdits noeuds en vue de détecter une communication d'homologue à homologue réussie et maintenue entre ledit noeud initiateur et le noeud invité ou chaque noeud invité.

4. Serveur selon l'une quelconque des revendications précédentes, exploitable en outre de manière à stocker un enregistrement d'activité de communication par un ou plusieurs noeuds.

5. Serveur selon l'une quelconque des revendications précédentes, exploitable de manière à envoyer, à un noeud initiateur, au cas où un noeud invité n'est pas en mesure d'établir une communication de conférence avec ledit noeud initiateur selon ledit message d'interrogation sur les capacités, un message de signalisation d'échec contenant des informations indiquant le manque de capacités dudit noeud invité.

6. Réseau informatique comprenant un serveur (30) et une pluralité de noeuds (50) dans une communication en réseau avec ledit serveur, ledit serveur comprenant :
un moyen de réception de messages d'initiation exploitable de manière à recevoir et à traiter un message de demande de conférence à partir d'un noeud initiateur de ladite pluralité de noeuds, ledit message de demande de conférence identifiant un ou plusieurs noeuds invités avec lesquels ledit noeud initiateur nécessite une communication de conférence et des exigences de capacités desdits noeuds invités sur la base de quoi dépend la communication de conférence ;
un moyen de vérification de noeud, exploitable de manière à vérifier l'existence dudit un ou desdits plusieurs noeuds invités, et à demander si le noeud invité ou chaque noeud invité présente des capacités propres à satisfaire lesdites exigences de capacités identifiées dans ledit message de demande de conférence; et
un moyen d'envoi de message d'établissement de conférence exploitable de manière à envoyer, audit noeud initiateur, un message contenant des informations suffisantes pour permettre audit noeud initiateur d'établir une communication de conférence avec le noeud invité ou chaque noeud invité avec des capacités pertinentes pour répondre auxdites exigences de capacités.

7. Réseau informatique selon la revendication 6, comprenant un moyen d'indication de présence exploitable de manière à surveiller une communication de conférence établie entre ledit noeud initiateur et le noeud invité ou chaque noeud invité, en vue de déterminer si ladite communication de conférence doit être maintenue.

8. Réseau informatique selon la revendication 7, dans lequel ledit moyen d'indication de présence est exploitable de manière à déterminer si un ou plusieurs desdits noeuds ont quitté la communication de conférence dans ledit réseau.

9. Réseau informatique selon la revendication 7 ou 8, dans lequel ladite unité d'indication de présence est exploitable de manière à surveiller la cessation d'activité de conférence par ledit noeud initiateur, et en réponse à quoi, de manière à envoyer au noeud invité ou à chaque noeud invité, avec lequel ledit noeud initiateur est en communication de conférence, un message de cessation de conférence.

10. Réseau informatique selon la revendication 9, dans lequel ladite unité d'indication de présence est exploitable de manière à détecter la cessation d'activité de conférence, sous la forme d'une cessation d'activité réseau par ledit noeud initiateur ou d'un message de cessation de conférence envoyé par ledit noeud initiateur.

11. Réseau informatique selon l'une quelconque des revendications 6 à 10, dans lequel ledit serveur est exploitable, dans le cas ou un noeud invité est déterminé comme n'étant pas apte à établir une communication de conférence selon lesdites exigences de capacités, de manière à envoyer audit noeud initiateur un message identifiant ledit manque de capacités.

12. Réseau informatique selon l'une quelconque des revendications 6 à 11, dans lequel ledit moyen de vérification de noeud est exploitable de manière à envoyer, au noeud invité ou à chaque noeud invité, un message de demande de capacités contenant des informations décrivant lesdites exigences de capacités, et est en outre exploitable de manière à recevoir, à partir du noeud invité ou de chaque noeud invité, une réponse identifiant si ledit noeud répond auxdites exigences de capacités.

13. Procédé destiné à permettre l'établissement d'une communication de conférence entre une pluralité de noeuds mis en oeuvre dans des ordinateurs en réseau, le procédé comportant les étapes consistant à recevoir un message d'initialisation de connexion contenant des informations connexes à des informations d'adressage de réseau d'un noeud initiant une communication de conférence, des informations d'identification d'un ou plusieurs autres noeuds destinés à être invités à rejoindre une communication de conférence, et des informations identifiant des capacités requises d'un noeud invité en vue de participer à ladite communication, en réponse à la réception d'un tel message, à envoyer, à chaque noeud invité identifié dans ledit message, un message d'interrogation sur les capacités invitant le noeud invité à répondre par des capacités permettant de gérer une communication de conférence et, au cas où ledit noeud invité est apte à être impliqué dans ladite communication de conférence, à impliquer ledit noeud invité dans la communication de conférence avec ledit noeud initiateur.

14. Produit-programme informatique comprenant des instructions exécutables par un processeur, lesquelles, lorsqu'elles sont exécutées sur un ordinateur générique, amènent ledit ordinateur à être exploité en qualité de serveur selon l'une quelconque des revendications 1 à 6.

15. Produit-programme informatique comprenant des instructions exécutables par un processeur, lesquelles, lorsqu'elles sont exécutées sur un ordinateur générique, amènent ledit ordinateur à mettre en oeuvre un procédé selon la revendication 13.
